# EUROPEAN PATENT APPLICATION

(11) **EP 4 518 469 A1**
(43) Date of publication of application: **05.03.2025**
(21) Application number: 22939138.8
(22) Date of filing: 28.04.2022
(51) Int. Cl.: H04W 72/00, H04B 7/02

(54) **TRANSMISSION MODE INDICATION METHODS AND APPARATUSES, COMMUNICATION DEVICE, AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2022/090062
(87) International publication number: WO 2023/206288

(57) **Abstract**

Provided in the embodiments of the present disclosure are transmission mode indication methods and apparatus, a communication device, and a storage medium. A transmission mode indication method is executed by a network device and comprises sending indication information, the indication information being used for indicating at least one transmission mode for supporting coordinated transmission from multi-panels (MPs) to multi-transmission and reception points (MTRPs) (S31).

## Description

### TECHNICAL FIELD

The present disclosure relates to, but not limited to, the field of communication technology, in particular to a transmission mode indication method, an apparatus, a communication device, and a storage medium.

### BACKGROUND

In the related art, in order to improve a coverage at a cell edge and provide more balanced service quality in a cell, a Coordinated Multiple Point transmission (CoMP) technology is a very important technical measure for a New Radio (NR) system. The CoMP technology refers to the use of coordination between multi-panels (MPs) and/or multi-transmission reception point (MTRPs) to perform transmission and/or reception via a plurality of beams at a plurality of directions, so as to reduce any negative influence caused by a blocking effect.

Currently, there are various transmission modes supported by a user equipment (UE) in an uplink transmission for a coordinated transmission from MPs to MTRPs. If these transmission modes are not differentiated from each other by an indication, the UE may not know which transmission mode is to be used to perform the transmission.

### SUMMARY

An object of the present disclosure is to provide a transmission mode indication method, an apparatus, a communication device, and a storage medium.

In a first aspect, the present disclosure provides in some embodiments a transmission mode indication method performed by a network device, including sending indication information. The indication information is used to indicate at least one transmission mode supported by a UE in an uplink transmission for a coordinated transmission from MPs to MTRPs.

In a second aspect, the present disclosure provides in some embodiments a transmission mode indication method performed by a UE, including: receiving indication information; and determining at least one transmission mode supported by the UE in an uplink transmission for a coordinated transmission from MPs to MTRPs based on the indication information.

In a third aspect, the present disclosure provides in some embodiments a transmission mode indication apparatus applied to a network device, including a sending module configured to send indication information. The indication information is used to indicate at least one transmission mode supported by a UE in an uplink transmission for a coordinated transmission from MPs to MTRPs.

In a fourth aspect, the present disclosure provides in some embodiments a transmission mode indication apparatus applied to a UE, including: a reception module configured to receive indication information; and a processing module configured to determine at least one transmission mode supported by the UE in an uplink transmission for a coordinated transmission from MPs to MTRPs.

In a fifth aspect, the present disclosure provides in some embodiments a communication device, including: a processor; and a memory storing therein an instruction executable by the processor. The processor is configured to execute the instruction to implement any of the above-mentioned transmission mode indication methods.

In a sixth aspect, the present disclosure provides in some embodiments a computer storage medium storing therein a computer-executable program. The computer-executable program is executed by a processor to implement any of the above-mentioned transmission mode indication methods.

The technical solutions provided in the embodiments of the present disclosure may include the following beneficial effects.

In the embodiments of the present disclosure, the network device sends the indication information to the UE, and the indication information is used to indicate at least one transmission mode supported by the UE in the uplink transmission for the coordinated transmission from MPs to MTRPs. In this regard, the UE accurately knows which transmission mode needs to be adopted to perform transmission, so as to achieve the reliable coordinated transmission from MPs to MTRPs, i.e., achieve the reliable CoMP transmission.

It should be appreciated that, the above-mentioned general description and the following detailed description are for illustrative and explanatory purposes, but shall not be used to limit the embodiments of the present disclosure.

### BRIEF DESCRIPTION OF THE DRAWINGS

FIG. 1 is a schematic view showing a wireless communication system according to an embodiment of the present disclosure;
FIG. 2 is a schematic view showing CoMP according to an embodiment of the present disclosure;
FIG. 3 is a flow chart of a transmission mode indication method according to an embodiment of the present disclosure;
FIG. 4 is another flow chart of the transmission mode indication method according to an embodiment of the present disclosure;
FIG. 5 is yet another flow chart of the transmission mode indication method according to an embodiment of the present disclosure;
FIG. 6 is still yet another flow chart of the transmission mode indication method according to an embodiment of the present disclosure;
FIG. 7 is still yet another flow chart of the transmission mode indication method according to an embodiment of the present disclosure;
FIG. 8 is still yet another flow chart of the transmission mode indication method according to an embodiment of the present disclosure;
FIG. 9 is a block diagram of a transmission mode indication apparatus according to an embodiment of the present disclosure;
FIG. 10 is another block diagram of the transmission mode indication apparatus according to an embodiment of the present disclosure;
FIG. 11 is a block diagram of a UE according to an embodiment of the present disclosure; and
FIG. 12 is a block diagram of a base station according to an embodiment of the present disclosure.

### DETAILED DESCRIPTION

The present disclosure will be described hereinafter in details in conjunction with illustrative embodiments, and examples thereof are shown in the drawings. Unless otherwise specified, identical numerals in different drawings represent identical or similar elements. The implementations in the following description do not include all implementations consistent with the embodiments of the present disclosure, and in contrast, they are merely examples of devices and methods consistent with some aspects of the embodiments of the present disclosure.

The terms used in embodiments of the present disclosure are for illustrative purposes only, but do not intend to limit the present disclosure. Such a singular form as "one" or "the" used in the embodiments of the present disclosure and the appended claims also intends to include a plural form, unless otherwise defined. It should be appreciated that, the expression "and/or" used in the context is meant to include any combination, or all possible combinations, of one or more associated items.

It should be appreciated that, although such expressions as "first", "second" and "third" are used to describe various information, the information are not limited by these expressions. These expressions are merely used to differentiate the information of a same type from each other. For example, without departing from the scope of the present disclosure, first information may also be called as second information, and similarly second information may also be called as first information. Depending on the context, such a word as "if" may be construed as "when ...", "in the case that ... " or "in response to determining that ... ".

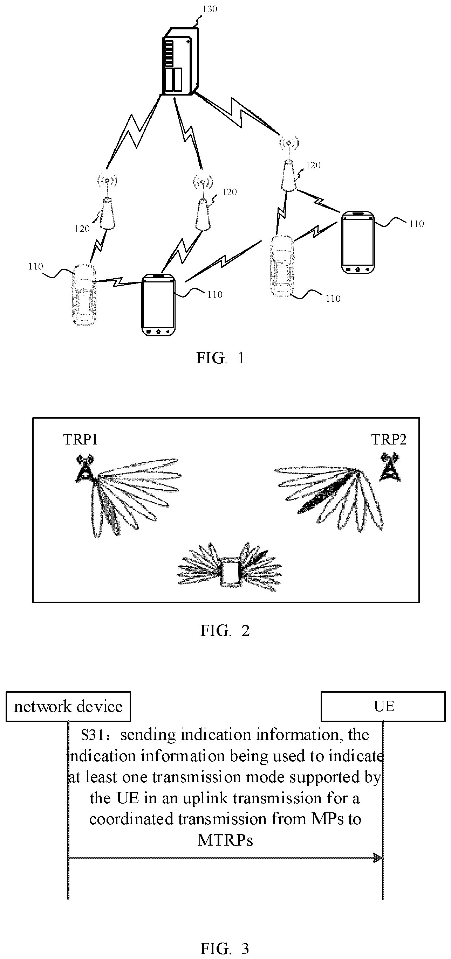

FIG. 1 is a schematic view showing a wireless communication system according to the embodiment of the present disclosure. As shown in FIG. 1, the wireless communication system is a communication system based on a cellular mobile communication technology, and it includes several UEs 110 and several base stations 120.

The UE 110 may be a device for providing voice and/or data connectivity to a user. The UE 110 may communicate with one or more core networks via a Radio Access Network (RAN). The UE 110 may be an Internet of Things (IoT) UE, e.g., a sensor device or a mobile phone (also called as cellular phone), or a computer having the IoT UE, e.g., an immobile, portable, pocket-sized, handheld, built-in or vehicle-mounted device. For example, the UE may be a Station (STA), a subscriber unit, a subscriber station, a mobile station, a mobile, a remote station, an access point, a remote terminal, an access terminal, a user terminal, a user agent, a user device or UE. The UE 110 may also be a device for an unmanned aerial vehicle. The UE 110 may also be a vehicle-mounted device, e.g., an electronic control unit having a wireless communication function, or a wireless terminal coupled to an external electronic control unit. Alternatively, the UE 110 may also be a roadside device, e.g., a street lamp or a signal lamp having a wireless communication function, or any other roadside devices.

The base station 120 may be a network side device in a wireless communication system. The wireless communication system may be a 4th-Generation (4G) communication system, also called as Long-Term Evolution (LTE) system, or a 5th-Generation (5G) system, also called as New Radio (NR) system or 5G NR system. Alternatively, the wireless communication system may also be a next-generation system of the 5G system. An access network in the 5G system may be called as a New Generation-Radio Access Network (NG-RAN).

The base station 120 may be an evolved Node B (eNB) used in the 4G system, or an access device (gNB) with centralized/distributed architecture in the 5G system. In a case that the base station 120 has the centralized/distributed architecture, usually it includes a Central Unit (CU) and at least two Distributed Units (DUs). The CU is provided with a protocol stack for a Packet Data Convergence Protocol (PDCP) layer, a Radio Link Control (RLC) layer and a Media Access Control (MAC) layer. The DU is provided with a protocol stack for a Physical (PHY) layer. In the embodiments of the present disclosure, a specific implementation mode of the base station 120 will not be particularly defined.

Wireless connection is established between the base station 120 and the UE 110 through a wireless air interface. In different implementation modes, the wireless air interface is a wireless air interface based on a standard of a 4G mobile communication network technology; or the wireless air interface is a wireless air interface based on a standard of a 5G mobile communication network technology, e.g., a new air interface; or the wireless air interface is a wireless air interface based on a standard of a mobile communication network technology next to the 5G mobile communication network technology.

In some embodiments of the present disclosure, End to End (E2E) connection may also be established between the UEs 110, e.g., in such scenarios as vehicle to vehicle (V2V) communication, vehicle to Infrastructure (V2I) communication and vehicle to pedestrian (V2P) communication in vertical to everything (V2X).

Here, the UE may be considered as a terminal device in the following embodiments.

In some embodiments of the present disclosure, the wireless communication system may also include a network management device 130.

The base stations 120 are coupled to the network management device 130. The network management device 130 may be a core network device in the wireless communication system, e.g., the network management device 130 may be a Mobility Management Entity (MME) in an Evolved Packet Core (EPC). Alternatively, the network management device may also be any other core network device, e.g., Serving GateWay (SGW), Public Data Network GateWay (PGW), Policy and Charging Rules Function (PCRF) or Home Subscriber Server (HSS). An implementation mode of the network management device 130 will not be particularly defined herein.

For ease of understanding, a plurality of implementation modes has been listed to clearly describe the technical solutions in the embodiments of the present disclosure. Of course, it should be appreciated that, the embodiments of the present disclosure may be performed individually, or performed in combination with the method in the other embodiments, or performed, individually or after the combination with the method, together with some other methods known in the related art, which will not be particularly defined herein.

In order to understand the technical solution described in any embodiment of the present disclosure in a better manner, the related art will be described partially hereinafter at first.

In some application scenarios, at a high frequency band, along with an increase in an integration level of an active antenna device, a modularized active antenna array prefers to be adopted. An antenna array for each TRP is divided into several antenna panels relatively independent of each other, so a form of the entire array and a quantity of ports may be flexibly adjusted according to a deployment scenario and service requirements. The antenna panels or TRPs are coupled to each other through an optical fiber, so as to achieve the distributed deployment in a more flexible manner. At a millimeter wave band, along with a decrease in a wavelength, a blocking effect caused by such obstacles as human body or vehicle will become more obvious. In this case, in order to ensure robustness of link connection, coordination between MTRPs or MPs may also be used to perform transmission and/or reception via a plurality of beams at a plurality of directions, so as to reduce any negative influence caused by the blocking effect.

In some embodiments of the present disclosure, depending on a mapping relation between a transmitted data flow and MTRPs or MPs, a transmission mode corresponding to the CoMP transmission technology includes a coherent or non-coherent transmission mode. In the coherent transmission mode, each data layer is mapped to the MTRPs or MPs with a weighted vector. In the non-coherent transmission mode, each data layer is merely mapped to a part of MTRPs or MPs.

It should be appreciated that, the research and standardization on MTRP has not been fully developed yet in NR Rel-15. R16 mainly focuses on the standardization on a Physical Downlink Shared Channel (PDSCH). In R17, the standardization on MTRP has been enhanced with respect to a Physical Uplink Control Channel (PUCCH) or Physical Uplink Control Channel (PUCCH), but merely a Time-Division Multiplexing (TDM) transmission scheme is standardized. Currently, in R18, MP and/or MTRP-based simultaneous transmission enhancement is taken into consideration for the PUSCH/PUCCH.

In some embodiments of the present disclosure, as shown in FIG. 2, coordinated transmission in a TDM transmission mode is provided, i.e., a same Transport Block (TB) for the PUSCH is transmitted to different TRPs of the base station in a time-division manner at different transmission occasions in a time domain. In this coordinated transmission method, a UE capability is less required, i.e., the capability of supporting the simultaneous transmission of beams is not required, and a transmission delay is relatively large.

In the related art, the simultaneous coordinated transmission wants to be performed in a direction from MPs to MTRPs, so as to increase the transmission reliability and throughput, and effectively reduce the transmission delay for the MTRPs. However, the UE is required to have the capability of transmitting multiple beams simultaneously.

As shown in FIG. 3, the present disclosure provides in some embodiments a transmission mode indication method performed by a network device, which includes the following step.

Step S31: indication information is sent. The indication information is used to indicate at least one transmission mode supported by a UE in an uplink transmission for a coordinated transmission from MPs to MTRPs.

Here, the network device includes, but not limited to, an access network device or a core network device. The access network device may be various base stations, e.g., 2G base station, 3G base station, 4G base station, 5G base station, or any other evolved base station. The core network device may include, but not limited to, various entities or network element functions of a core network.

In one embodiment of the present disclosure, Step S31 includes sending the indication information to the UE.

Here, the UE may include various mobile terminals or fixed terminals. For example, the UE includes, but not limited to, mobile phone, computer, server, wearable device, game console, or multi-media device.

In one embodiment of the present disclosure, the indication information is used to indicate at least one transmission mode. Here, the transmission mode is just a transmission mode from MPs to MTRPs, i.e., a CoMP transmission mode.

In some embodiments of the present disclosure, the expression "a plurality of" refers to two or more.

In one embodiment of the present disclosure, a coordinated transmission from MPs to MTRPs is just CoMP transmission.

In one embodiment of the present disclosure, the coordinated transmission from MPs to MTRPs includes a simultaneous transmission from MPs to MTRPs, e.g., a simultaneous transmission from a first antenna panel to a first TRP of a base station and from a second antenna panel to a second TRP. Here, the simultaneous transmission may refer to the transmission s performed simultaneously in a slot, or the transmissions performed at a predetermined interval of slots.

Of course, in some other embodiments of the present disclosure, the coordinated transmission from MPs to MTRPs may also include the other type of coordinated transmission, e.g., a transmission from the first antenna panel and the second antenna panel as a whole to different TRPs of the base station, or joint transmission from MPs to MTRPs.

In one embodiment of the present disclosure, the indication information is used to indicate at least one transmission mode supported by the UE in the uplink transmission for the coordinated transmission from MPs to MTRPs for a PUSCH scheduled by Single-Downlink Control Information (S-DCI).

In one embodiment of the present disclosure, the at least one transmission mode indicated in the indication information may be at least one transmission mode indicated to be configured, or at least one transmission mode indicated to be supported.

For example, the network device sends the indication information, and the indication information is used to indicate at least one configured transmission mode supported by the UE for the coordinated transmission from MPs to MTRPs in the uplink transmission. In this way, the network device may configure at least one transmission mode for the UE, and the at least one transmission mode may be performed by the UE.

For example, the network device sends the indication information, and the indication information is used to indicate one transmission mode supported by the UE for the coordinated transmission from MPs to MTRPs. Here, the supported transmission mode is just an activated transmission mode or a to-be-used transmission mode. In this way, the network device may indicate one supported transmission mode to the UE, and the supported transmission mode is a transmission mode actually activated and used by the UE.

In some embodiments of the present disclosure, the transmission modes includes, but not limited to, at least one of a space division multiplexing (SDM) transmission mode or a frequency division multiplexing (FDM) transmission mode.

The SDM transmission mode includes at least one of a single frequency network coherent joint transmission (SFN-CJT) transmission mode, a single frequency network non-coherent joint transmission (SFN-NC-JT) transmission mode, a single-redundancy version (RV) SDM transmission mode, or a multi-RV SDM transmission mode.

The FDM transmission mode includes at least one of a single-RV FDM transmission mode or a multi-RV FDM transmission mode.

Here, the SFN-CJT transmission mode is achieved by sending a same TB at a same data layer from different panels to the TRP, and mapping the TB to a same time/frequency resource.

The SFN-NC-JT transmission mode is achieved by sending a same TB at a same data layer from different panels to the TRP, and mapping the TB to a same time/frequency resource.

The single-RV SDM transmission mode is achieved by sending a same TB at different data layers from different panels to the TRP, and mapping the TB to a same time/frequency resource.

The multi-RV SDM transmission mode is achieved by sending different RVs of a same TB at different data layers from different panels to the TRP, and mapping the different RVs of the TB to a same time/frequency resource.

The single-RV FDM transmission mode is achieved by sending a same TB at a same data layer from different panels to the TRP, and mapping the TB to frequency resources not overlapping with each other.

The multi-RV FDM transmission mode is achieved by sending different RVs of a same TB at a same data layer from different panels to the TRP, and mapping the different RVs of the TB to frequency resources not overlapping with each other.

Here, in the SFN-CJT transmission mode, a data flow is encoded by different panels as a whole, and in the SFN-NC-JT transmission mode, the data flow is encoded by different panels respectively.

In some other embodiments of the present disclosure, the transmission mode include, but not limited to, at least one of a SFN transmission mode, a single-RV transmission mode, or a multi-RV transmission mode.

The SFN transmission mode includes, but not limited to, at least one of a SFN-CJT transmission mode and/or a SFN-NC-JT transmission mode.

The single-RV transmission mode includes, but not limited to, at least one of a single-RV SDM transmission mode or a single-RV FDM transmission mode.

The multi-RV transmission mode includes, but not limited to, at least one of a multi-RV SDM transmission mode or a multi-RV FDM transmission mode.

Of course, in the other embodiments of the present disclosure, the transmission mode may be any other transmission mode, as long as it is a transmission mode supported by the UE for the coordinated transmission from MPs to MTRPs, i.e., a specific transmission mode will not be particularly defined herein. For example, the transmission mode may include, but not limited to, at least one of a first SDM transmission mode (SDM-1), a second SDM transmission mode (SDM-2), a third SDM transmission mode (SDM-3), a fourth SDM transmission mode (SDM-4), a first FDM transmission mode, or a second FDM transmission mode (FDM-2).

In the embodiments of the present disclosure, the network device sends the indication information to the UE, and the indication information is used to indicate at least one transmission mode supported by the UE in the uplink transmission for the coordinated transmission from MPs to MTRPs. In this way, the UE accurately knows which transmission mode is to be adopted to perform the transmission, so as to achieve the reliable coordinated transmission from MPs to MTRPs, i.e., achieve the reliable CoMP transmission.

It should be appreciated that, the method in the embodiments of the present disclosure may be performed individually, or performed in combination with some methods in the embodiments of the present disclosure or some methods known in the related art.

In some embodiments of the present disclosure, in Step S31, the sending the indication information includes sending a RRC signaling carrying the indication information, and the indication information is used to indicate one supported transmission mode.

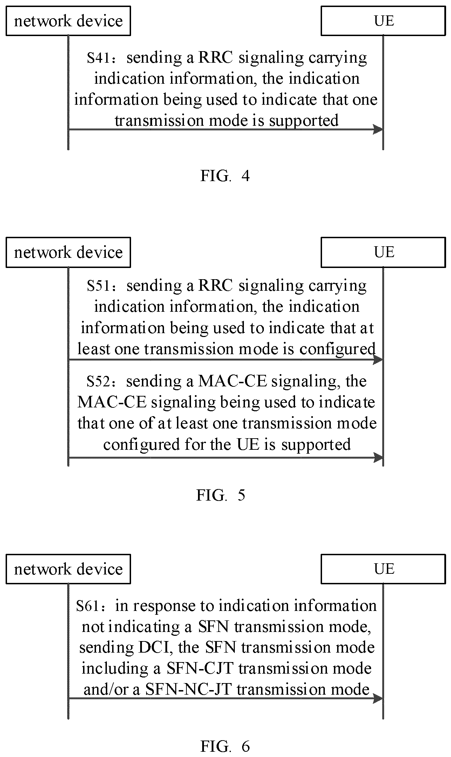

As shown in FIG. 4, the present disclosure provides in some embodiments a transmission mode indication method performed by a network device, which includes the following step.

Step S41: a RRC signaling carrying indication information is sent. The indication information is used to indicate one supported transmission mode.

In some embodiments of the present disclosure, the indication information is the indication information in Step S31, and the transmission mode may be any transmission mode in the above-mentioned embodiments.

For example, the transmission mode may include, but not limited to at least one of a SFN-CJT transmission mode, a SFN-NC-JT transmission mode, a single-RV SDM transmission mode, a multi-RV SDM transmission mode, a single-RV FDM transmission mode, or a multi-RV FDM transmission mode.

Here, the transmission mode indicated in the indication information is just the transmission mode which is configured by the network device for the UE and which is activated and used by the UE.

In one embodiment of the present disclosure, a predetermined information field or a predetermined indication field of the RRC signaling carries the indication information. Alternatively, a predetermined bit of the RRC signaling carries the indication information, and the predetermined bit may include one or more bits.

Here, different predetermined information fields, predetermined indication fields or predetermined bits of the RRC signaling indicate different transmission modes. Here, different transmission modes may be indicated by different values of the predetermined information field, predetermined indication fields or predetermined bits of the RRC signaling. For example, in a case that a first bit in a first type of information field of the RRC signaling has a value of "0", the SFN-CJT transmission mode is indicated; in a case that the first bit in the first type of information field of the RRC signaling has a value of "1", the SFN-NC-CJT transmission mode is indicated; in a case that a second bit in the first type of information field of the RRC signaling has a value of "0", the single-RV SDM transmission mode is indicated; in a case that a first bit of a second type of information field of the RRC signaling has a value of "1", the multi-RV FDM transmission mode is indicated, etc.

In the embodiments of the present disclosure, the indication information carried in one RRC signaling is used to indicate one transmission mode for the UE. On one hand, the UE may accurately know the transmission mode supported by the UE. On the other hand, one RRC signaling is used to indicate the transmission mode supported by the UE, i.e., indicate the transmission mode configured for the UE, so it is able to reduce a signaling overhead, and reduce the power consumption of the network device and the UE.

It should be appreciated that, the method in the embodiments of the present disclosure may be performed individually, or performed in combination with some methods in the embodiments of the present disclosure or some methods known in the related art.

In some embodiments of the present disclosure, in Step S31, the sending the indication information includes sending a RRC signaling carrying the indication information, and the indication information is used to indicate at least one transmission mode to be configured.

The method includes sending a Medium Access Control Control Element (MAC-CE) signaling. The MAC-CE signaling is used to indicate that one transmission mode in the at least one transmission mode configured for the UE is supported.

As shown in FIG. 5, the present disclosure provides in some embodiments a transmission mode indication method performed by a network device, which includes the following steps.

Step S51: an RRC signaling carrying indication information is sent. The indication information is used to indicate at least one transmission mode to be configured.

Step S52: a MAC-CE signaling is sent. The MAC-CE signaling is used to indicate that one transmission mode in the at least one transmission mode configured for the UE is supported.

Here, the MAC-CE signaling is used to indicate that one transmission mode in the at least one transmission mode configured for the UE is supported, i.e., the MAC-CE signaling indicates that one transmission mode in the at least one transmission mode indicated in the indication information to be configured is supported.

In some embodiments of the present disclosure, the indication information may be the indication information in Step S31, and the transmission mode may be the transmission mode in the above-mentioned embodiments.

For example, the network device sends the RRC signaling carrying the indication information to the UE. For example, a predetermined information field of the RRC signaling has a value of "10", so as to indicate a SFN-CJT transmission mode and a SFN-NC-JT transmission mode in the SDM transmission mode, and a single-RV FDM transmission mode and a multi-RV FDM transmission mode in the FDM transmission mode. The network device sends the MAC-CE signaling to the UE, and the MAC-CE signaling is used to indicate the SFN-NC-JT transmission mode. In this way, the UE determines that the SFN-NC-JT transmission mode is supported by the UE based on the MAC-CE signaling.

In the embodiments of the present disclosure, the network device configures at least one transmission mode for the UE via the RRC signaling, and indicates, via the MAC-CE signaling, the UE to activate and use one transmission mode in the configured at least one transmission mode. In this way, the network device may configure an appropriate transmission mode to be activated and used by the UE in different scenarios or within different time periods.

It should be appreciated that, the method in the embodiments of the present disclosure may be performed individually, or performed in combination with some methods in the embodiments of the present disclosure or some methods known in the related art.

In some embodiments of the present disclosure, in Step S31, the sending the indication information includes sending a RRC signaling carrying the indication information, and the indication information is used to indicate at least one transmission mode to be configured.

The method includes, in response to the indication information not indicating a SFN transmission mode, sending DCI. The SFN transmission mode includes the SFN-CJT transmission mode and/or the SFN-NC-JT transmission mode.

A first type of information field of the DCI is used to indicate that a SDM transmission mode or a FDM transmission mode is supported, and/or a second type of information field of the DCI is used to indicate that a single-RV transmission mode or a multi-RV transmission mode is supported.

The single-RV transmission mode includes the single-RV SDM transmission mode or the single-RV FDM transmission mode, and the multi-RV transmission mode includes the multi-RV SDM transmission mode or the multi-RV FDM transmission mode.

In some embodiments of the present disclosure, the indication information may be the indication information in Step S31, and the transmission mode may be a transmission mode in the above-mentioned embodiments.

As shown in FIG. 6, the present disclosure provides in some embodiments a transmission mode indication method performed by a network device, which includes the following step.

Step S61: in response to indication information not indicating a SFN transmission mode, DCI is sent. The SFN transmission mode includes the SFN-CJT transmission mode and/or the SFN-NC-JT transmission mode.

The DCI includes at least one of a first type of information field and a second type of information field. The first type of information field of the DCI is used to indicate that the SDM transmission mode or the FDM transmission mode is supported, and/or the second type of information field of the DCI is used to indicate that a single-RV transmission mode or a multi-RV transmission mode is supported.

The single-RV transmission mode includes the single-RV SDM transmission mode or the single-RV FDM transmission mode, and the multi-RV transmission mode includes the multi-RV SDM transmission mode or the multi-RV FDM transmission mode.

In some embodiments of the present disclosure, prior to Step S61, the method includes receiving the indication information, and the indication information indicates at least one transmission mode not including the SFN transmission mode.

Optionally, in one embodiment of the present disclosure, the indication information does not indicate the SFN transmission mode, which includes cases of: a wireless communication protocol includes a SFN scheme but the indication information does not indicate the SFN transmission mode, or the UE supports the SFN transmission mode but the indication information does not indicate the SFN transmission mode, or the UE does not support the SFN transmission mode and the indication information does not indicate the SFN transmission mode.

In some embodiments of the present disclosure, the first type of information field includes an antenna port indication field, and the second type of information field includes at least one of a single-TRP-and-MTRP dynamic switching indication field, a sounding reference signal resource indicator (SRI) field, a transmitted precoding matrix indicator (TPMI) field, an RV codepoint or any other information field in the DCI.

In some other embodiments of the present disclosure, the DCI includes at least one of a first type of information field and a second type of information field. The first type of information field includes a single-TRP-and-MTRP dynamic switching indication field, and the second type of information field includes at least one of an SRI field, a TPMI field, an RV codepoint or any other information field in the DCI.

Here, any information field in the DCI refers to an information field which has been defined, has been used or has not been used in the DCI. Here, any information field in the DCI may include any one or more codepoints in the DCI.

Here, each of the first type of information field and the second type of information field may also be the other information field in the DCI or at least one codepoint in the other information field. Here, each of the first type of information field and the second type of information field may be an information field which has been defined or used in the DCI, or an information field which has not been defined or used in the DCI yet.

Here, after the transmission mode has been determined as the SDM transmission mode or the FDM transmission mode based on the first type of information field, the single-RV transmission mode determined based on the second type of information field is the single-RV SDM transmission mode or the single-RV FDM transmission mode, and/or the multi-RV transmission mode determined based on the second type of information field is the multi-RV SDM transmission mode or the multi-RV FDM transmission mode.

For example, in a case that the transmission mode is determined as the SDM transmission mode based on the first type of information field, the single-RV transmission mode determined based on the second type of information field is the single-RV SDM transmission mode, and/or the determined multi-RV transmission mode is the multi-RV SDM transmission mode. Alternatively, in a case that the transmission mode is determined as the FDM transmission mode based on the first type of information field, the single-RV transmission mode determined based on the second type of information field is the single-RV FDM transmission mode, and/or the determined multi-RV transmission mode is the multi-RV FDM transmission mode.

In some embodiments of the present disclosure, the first type of information field includes an antenna port indication field. The antenna port indication field carries a first antenna port parameter for indicating the SDM transmission mode, or the antenna port indication field carries a second antenna port parameter for indicating the FDM transmission mode.

For example, in a case that the first antenna port parameter carried in the antenna port indication field of the DCI is "0", it indicates the SDM transmission mode. Here, in a case that the first antenna port parameter is "0", it means that a quantity of antenna ports is within a first numerical range, e.g., 1 or 2.

For example, in a case that the first antenna port parameter carried in the antenna port indication field of the DCI is "1", it indicates the FDM transmission mode. Here, in a case that the first antenna port parameter is "1", it means that a quantity of antenna ports is within a second numerical range, e.g., 3 or 4.

In some embodiments of the present disclosure, the first type of information field includes the single-TRP-and-MTRP dynamic switching indication field. A first codepoint of the single-TRP-and-MTRP dynamic switching indication field carries first indication information for indicating the SDM transmission mode; or a first codepoint of the single-TRP-and-MTRP dynamic switching indication field carries second indication information for indicating the FDM transmission mode.

For example, the first codepoint of the single-TRP-and-MTRP dynamic switching indication field of the DCI carries the first indication information for indicating the SDM transmission mode, or the first codepoint of the single-TRP-and-MTRP dynamic switching indication field of the DCI carries the second indication information for indicating the FDM transmission mode. For example, in a case that the first codepoint has a value of "10", it indicates TRP1, TRP2 and the SDM transmission mode, and in a case that the first codepoint has a value of "11", it indicates TRP1, TRP2 and the FDM transmission mode. Here, the first codepoint may include any two consecutive codepoints in the single-TRP-and-MTRP dynamic switching indication field. For example, in a case that the single-TRP-and-MTRP dynamic switching indication field of the DCI has four codepoints, the first codepoints may be last two codepoints in the four codepoints.

In some embodiments of the present disclosure, the second type of information field includes the single-TRP-and-MTRP dynamic switching indication field. A first codepoint of the single-TRP-and-MTRP dynamic switching indication field carries first indication information for indicating the single-RV transmission mode, or the first codepoint of the single-TRP-and-MTRP dynamic switching indication field carries second indication information for indicating the multi-RV transmission mode.

For example, the first codepoint of the single-TRP-and-MTRP dynamic switching indication field of the DCI carries the first indication information for indicating the single-RV transmission mode, or the first codepoint of the single-TRP-and-MTRP dynamic switching indication field of the DCI carries the second indication information for indicating the multi-RV transmission mode. For example, in a case that the first codepoint has a value of "10", it indicates TRP1, TRP2 and the single-RV transmission mode, and in a case that the first codepoint has a value of "11", it indicates TRP1, TRP2 and the multi-RV transmission mode. Here, the first codepoint may include any two consecutive codepoints in the single-TRP-and-MTRP dynamic switching indication field.

In some embodiments of the present disclosure, the second type of information field includes the SRI field or the TPMI field. A second codepoint of the SRI field or the TPMI field carries third indication information for indicating the single-RV transmission mode, or the second codepoint of the SRI field or the TPMI field carries fourth indication information for indicating the multi-RV transmission mode.

For example, the second codepoint of the SRI field or the TPMI field of the DCI carries the third indication information for indicating the single-RV transmission mode, or the second codepoint of the SRI field or the TPMI field of the DCI carries the fourth indication information for indicating the multi-RV transmission mode. For example, in a case that the second codepoint has a value of "0", it indicates the single-RV transmission mode, and in case that the second codepoint has a value of "1", it indicates the multi-RV transmission mode. Here, the second codepoint may be a last codepoint in the SRI field or the TPMI field.

In some embodiments of the present disclosure, the second type of information field includes the RV codepoint of the DCI. The RV codepoint of the DCI includes a first value indicating a single RV, which is used for indicating the single-RV transmission mode, or the RV codepoint of the DCI includes a second value indicating a RV set, which is used for indicating the multi-RV transmission mode.

For example, the RV codepoint of the DCI includes the first value indicating the single RV, which is used to indicate the single-RV transmission mode, or the RV codepoint of the DCI includes the second value indicating the RV set, which is used to indicate the multi-RV transmission mode. For example, in a case that the first value of the RV codepoint is "0", it indicates the single-RV transmission mode, and in a case that the second value of the RV codepoint is "1", it indicates the multi-RV transmission mode.

In the embodiments of the present disclosure, in a case that the indication information does not indicate the SFN transmission mode, the first type of information field of the DCI is used to indicate whether the transmission mode supported by the UE is the SDM transmission mode or the FDM transmission mode, and the second type of information field of the DCI is used to indicate whether the transmission mode supported by the UE is the single-RV transmission mode or the multi-RV transmission mode. In this way, it is able to accurately indicate the transmission mode supported by the UE, thereby to achieve the reliable coordinated transmission from MPs to MTRPs.

In addition, the first type of information field may be the antenna port indication field, the single-TRP-and-MTRP dynamic switching indication field, or the other information field, indication field or codepoint which has been used or not used in the DCI, and/or the second type of information field may be the single-TRP-and-MTRP dynamic switching indication field, the SRI field, the TPMI field, the RV codepoint, or the other information field, indication field or codepoint which has been used or not used in the DCI. In this way, it is able to provide diversified indications to be adapted to various application scenarios.

It should be appreciated that, the method in the embodiments of the present disclosure may be performed individually, or performed in combination with some methods in the embodiments of the present disclosure or some methods known in the related art.

In some embodiments of the present disclosure, Step S31 of sending the indication information includes sending a RRC signaling carrying the indication information, and the indication information is used to indicate that the at least one transmission mode is configured.

The method further includes, in response to the indication information not indicating the SFN transmission mode, sending a MAC-CE signaling. The SFN transmission mode includes the SFN-CJT transmission mode and/or the SFN-NC-JT transmission mode, and the MAC-CE signaling is used to indicate that the SDM transmission mode or the FDM transmission mode is supported.

The present disclosure further provides in some embodiments a transmission mode indication method performed by a network device, which includes: in response to the indication information not indicating a SFN transmission mode, sending a MAC-CE signaling. The SFN transmission mode includes the SFN-CJT transmission mode and/or the SFN-NC-JT transmission mode, and the MAC-CE signaling is used to indicate that the SDM transmission mode or the FDM transmission mode is supported.

In some embodiments of the present disclosure, the MAC-CE signaling carries fifth indication information for indicating the SDM transmission mode, or the MAC-CE signaling carries sixth indication information for indicating the FDM transmission mode.

For example, the network device sends the MAC-CE signaling to the UE, and a predetermined information field or a predetermined bit of the MAC-CE signaling carries first indication information for indicating the SDM transmission mode. The first indication information may be "0" or "00". Alternatively, the predetermined information field or the predetermined bit of the MAC-CE signaling carries second indication information for indicating the FDM transmission mode. The second indication information may be "1" or " 11".

In this way, in the embodiments of the present disclosure, whether the transmission mode is the FDM transmission mode or the SDM transmission mode may also be indicated via the MAC-CE signaling.

The present disclosure further provides in some embodiments a transmission mode indication method performed by a network device, which includes the following steps.

In response to indication information not indicating a SFN transmission mode, a MAC-CE signaling is sent. The SFN transmission mode includes the SFN-CJT transmission mode and/or the SFN-NC-JT transmission mode, and the MAC-CE signaling is used to indicate that the SDM transmission mode or the FDM transmission mode is supported.

DCI is sent, and a second type of information field of the DCI is used to indicate that the single-RV transmission mode or the multi-RV transmission mode is supported. The single-RV transmission mode includes the single-RV SDM transmission mode or the single-RV FDM transmission mode, and the multi-RV transmission mode includes the multi-RV SDM transmission mode or the multi-RV FDM transmission mode.

In this way, in the embodiments of the present disclosure, whether the transmission mode is the SDM transmission mode or the FDM transmission mode may also be indicated via the MAC-CE signaling. In addition, whether the transmission mode is the single-RV transmission mode or the multi-RV transmission mode is indicated jointly by the second type of information field of the DCI. As a result, it is also able to accurately indicate the transmission mode supported by the UE, and enable the transmission mode indication method to be adapted to more application scenarios.

It should be appreciated that, the method in the embodiments of the present disclosure may be performed individually, or performed in combination with some methods in the embodiments of the present disclosure or some methods known in the related art.

A transmission mode indication method performed by a UE will be described hereinafter, and the description thereof is similar to that of the above-mentioned transmission mode indication method performed by the network device. In addition, any technical details not disclosed in the embodiments involving the transmission mode indication method performed by the UE may refer to those mentioned hereinabove, which will not be particularly defined herein.

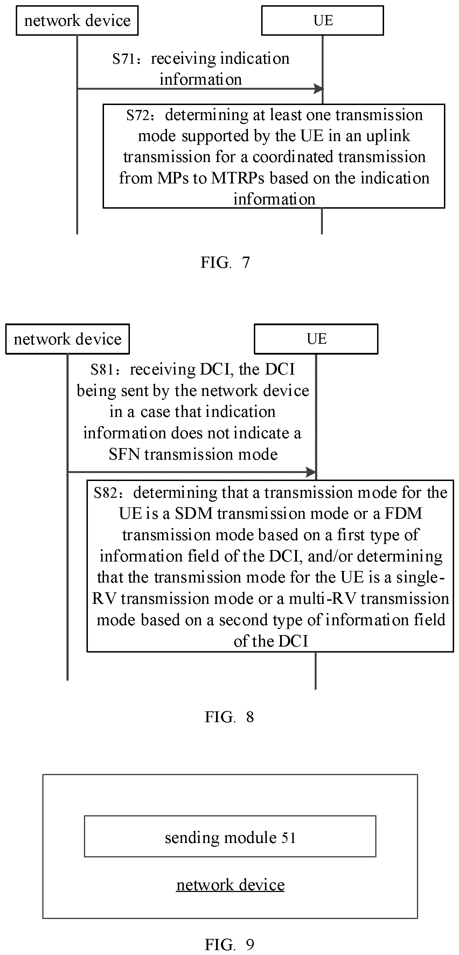

As shown in FIG. 7, the present disclosure provides in some embodiments a transmission mode indication mode performed by a UE, which includes the following steps.

Step S71: indication information is received.

Step S72: at least one transmission mode supported by the UE in an uplink transmission for a coordinated transmission from MPs to MTRPs is determined based on the indication information.

In some embodiments of the present disclosure, the indication information is the indication information in Step S31, and the transmission mode is the transmission mode in Step S31.

In some embodiments of the present disclosure, the transmission mode includes, but not limited to, at least one of a SDM transmission mode or a FDM transmission mode.

The SDM transmission mode includes at least one of a SFN-CJT transmission mode, a SFN-NC-JT transmission mode, a single-RV SDM transmission mode, or a multi-RV SDM transmission mode.

The FDM transmission mode includes at least one of a single-RV FDM transmission mode or a multi-RV FDM transmission mode.

In some embodiments of the present disclosure, Step S71 includes receiving a RRC signaling carrying the indication information, and Step S72 includes determining one of the at least one transmission mode supported by the UE in the uplink transmission based on the one of the at least one transmission mode indicated in the indication information.

The present disclosure further provides in some embodiments a transmission mode indication method performed by a UE, which includes: receiving a RRC signaling carrying indication information; and determining one of at least one transmission mode supported by the UE in an uplink transmission based on the one of the at least one transmission mode indicated in the indication information.

Here, in a case that the RRC signaling received by the UE merely indicates one transmission mode, this transmission mode is just the transmission mode supported by the UE. Here, the transmission mode supported by the UE is just a transmission mode activated and used by the UE.

In some embodiments of the present disclosure, Step S71 includes receiving the RRC signaling carrying the indication information.

The method further includes receiving a MAC-CE signaling.

Step S72 includes determining one of the at least one transmission mode supported by the UE in the uplink transmission from the at least one transmission mode configured as indicated in the indication information based on the MAC-CE signaling.

Here, the MAC-CE signaling is used to indicate that one of the at least one transmission mode configured for the UE is supported.

The present disclosure further provides in some embodiments a transmission mode indication method performed by the UE, which includes: receiving a RRC signaling carrying indication information, the RRC signaling being used to indicate that at least one transmission mode is configured; receiving a MAC-CE signaling, the MAC-CE signaling being used to indicate that one of the at least one transmission mode configured as indicated in the indication information is supported; and determining one of the at least one transmission mode configured for the UE based on the MAC-CE signaling.

As shown in FIG. 8, the present disclosure provides in some embodiments a transmission mode indication method performed by a UE, which includes the following steps.

Step S81: DCI is received. The DCI is sent by a network device in a case that the indication information does not indicate a SFN transmission mode.

The DCI includes at least one of a first type of information field or a second type of information field, and the SFN transmission mode includes the SFN-CJT transmission mode and/or the SFN-NC-JT transmission mode.

Step S82: the transmission mode for the UE is determined as the SDM transmission mode or the FDM transmission mode based on the first type of information field in the DCI, and/or the transmission mode for the UE is determined as the single-RV transmission mode or the multi-RV transmission mode based on the second type of information field in the DCI.

The single-RV transmission mode includes a single-RV SDM transmission mode or a single-RV FDM transmission mode, and the multi-RV transmission mode includes a multi-RV SDM transmission mode or a multi-RV FDM transmission mode.

In some embodiments of the present disclosure, the first type of information field includes an antenna port indication field, and the second type of information field includes at least one of a single-TRP-and-MTRP dynamic switching indication field, an SRI field, a TPMI field, an RV codepoint or any other information field in the DCI; or the first type of information field includes a single-TRP-and-MTRP dynamic switching indication field, and the second type of information field includes at least one of an SRI field, a TMPI field, an RV codepoint or any other information field in the DCI.

In some embodiments of the present disclosure, in Step S82, the determining that the transmission mode for the UE is the SDM transmission mode or the FDM transmission mode based on the first type of information field in the DCI includes one of: in response to the antenna port indication field carrying a first antenna port parameter, determining that the transmission mode for the UE is the SDM transmission mode; or in response to the antenna port indication field carrying a second antenna port parameter, determining that the transmission mode for the UE is the FDM transmission mode.

The present disclosure provides in some embodiments a transmission mode indication method performed by a UE, which includes: in response to an antenna port indication field carrying a first antenna port parameter, determining that a transmission mode for the UE is a SDM transmission mode; and/or in response to the antenna port indication field carrying a second antenna port parameter, determining that the transmission mode for the UE is a FDM transmission mode.

In some embodiments of the present disclosure, in Step S82, the determining that the transmission mode for the UE is the SDM transmission mode or the FDM transmission mode based on the first type of information field in the DCI includes one of: in response to a first codepoint of the single-TRP-and-MTRP dynamic switching indication field carrying first indication information, determining that the transmission mode for the UE is the SDM transmission mode; or in response to a first codepoint of the single-TRP-and-MTRP dynamic switching indication field carrying second indication information, determining that the transmission mode for the UE is the FDM transmission mode.

The present disclosure provides in some embodiments a transmission mode indication method performed by a UE, which includes: in response to a first codepoint of a single-TRP-and-MTRP dynamic switching indication field carrying first indication information, determining that the transmission mode for the UE is a SDM transmission mode; or in response to a first codepoint of the single-TRP-and-MTRP dynamic switching indication field carrying second indication information, determining that the transmission mode for the UE is a FDM transmission mode.

In some embodiments of the present disclosure, in Step S82, the determining that the transmission mode for the UE is the single-RV transmission mode or the multi-RV transmission mode based on the second type of information field in the DCI includes one of: in response to a first codepoint of the single-TRP-and-MTRP dynamic switching indication field carrying first indication information, determining that the transmission mode for the UE is the single-RV transmission mode; or in response to a first codepoint of the single-TRP-and-MTRP dynamic switching indication field carrying second indication information, determining that the transmission mode for the UE is the multi-RV transmission mode.

The present disclosure further provides in some embodiments a transmission mode indication method performed by a UE, which includes: in response to a first codepoint of a single-TRP-and-MTRP dynamic switching indication field carrying first indication information, determining that a transmission mode for the UE is a single-RV transmission mode; or in response to a first codepoint of the single-TRP-and-MTRP dynamic switching indication field carrying second indication information, determining that the transmission mode for the UE is a multi -RV transmission mode.

In some embodiments of the present disclosure, in Step S82, the determining that the transmission mode for the UE is the single-RV transmission mode or the multi-RV transmission mode based on the second type of information field in the DCI includes one of: in response to a second codepoint of the SRI field or the TPMI field carrying third indication information, determining that the transmission mode for the UE is the single-RV transmission mode; or in response to a second codepoint of the SRI field or the TPMI field carrying fourth indication information, determining that the transmission mode for the UE is the multi-RV transmission mode.

The present disclosure further provides in some embodiments a transmission mode indication method performed by a UE, which includes: in response to a second codepoint of an SRI field or a TPMI field carrying third indication information, determining that a transmission mode for the UE is a single-RV transmission mode; or in response to a second codepoint of the SRI field or the TPMI field carrying fourth indication information, determining that the transmission mode for the UE is a multi-RV transmission mode.

In some embodiments of the present disclosure, in Step S82, the determining that the transmission mode for the UE is the single-RV transmission mode or the multi-RV transmission mode based on the second type of information field in the DCI includes one of: in response to an RV codepoint of the DCI including a first value indicating a single RV, determining that the transmission mode for the UE is the single-RV transmission mode; or in response to an RV codepoint of the DCI including a second value indicating a RV set, determining that the transmission mode for the UE is the multi-RV transmission mode.

The present disclosure further provides in some embodiments a transmission mode indication method performed by a UE, which includes: in response to an RV codepoint of DCI including a first value indicating a single RV, determining that a transmission mode for the UE is a single-RV transmission mode; or in response to an RV codepoint of the DCI including a second value indicating a RV set, determining that the transmission mode for the UE is a multi - RV transmission mode.

The present disclosure further provides in some embodiments a transmission mode indication method performed by a UE, which includes: receiving a MAC-CE signaling, the MAC-CE signaling being sent by a network device in a case that the indication information does not indicate a SFN transmission mode, and the SFN transmission mode including the SFN-CJT transmission mode and/or the SFN-NC-JT transmission mode; and determining that the transmission mode for the UE is the SDM transmission mode or the FDM transmission mode based on the MAC-CE signaling.

The above embodiments may specifically refer to the description for a network device side, which will not be particularly defined herein.

It should be appreciated that, the method in the embodiments of the present disclosure may be performed individually, or performed in combination with some methods in the embodiments of the present disclosure or some methods known in the related art.

For further explanation of the embodiments of the present disclosure, specific exemplary embodiments will be provided as follows.

### First Exemplary Embodiment

In this embodiment, the present disclosure provides a transmission mode indication method performed by a communication device. The communication device includes a network device or a UE. The method includes the following steps.

Step S91A: a RRC signaling carrying indication information is sent by the network device. The indication information is used to indicate one transmission mode configured for the UE and supported by the UE in an uplink transmission for a coordinated transmission from MPs to MTRPs.

Step S92A: the UE receives the RRC signaling carrying the indication information, and determines one transmission mode supported by the UE in the uplink transmission based on the one transmission mode configured as indicated in the indication information.

Here, in Step S92A, the determining the one transmission mode supported by the UE in the uplink transmission includes determining one transmission mode supported by the UE in the uplink transmission for the coordinated transmission from MPs to MTRPs.

### Second Exemplary Embodiment

The present disclosure provides in this embodiment a transmission mode indication method performed by a communication device. The communication device includes a network device or a UE. The method includes the following steps.

Step S91B: the network device sends a RRC signaling carrying indication information. The indication information is used to indicate at least one transmission mode configured for the UE in an uplink transmission for a coordinated transmission from MPs to MTRPs.

Step S92B: the network device sends a MAC-CE signaling. The MAC-CE signaling is used to indicate that one of the at least one transmission mode configured for the UE is supported.

Step S93B: the UE receives the RRC signaling carrying the indication information and the MAC-CE signaling.

Step S94B: the UE determines one transmission mode supported in the uplink transmission based on the RRC signaling and the MAC-CE signaling.

### Third Exemplary Embodiment

The present disclosure provides in this embodiment a transmission mode indication method performed by a communication device. The communication device includes a network device or a UE. The method includes the following steps.

Step S91C: the network device sends a RRC signaling carrying indication information. The indication information is used to indicate at least one transmission mode configured for the UE in an uplink transmission for a coordinated transmission from MPs to MTRPs.

Step S92C: the network device determines that the indication information does not indicate a SFN transmission mode, and sends DCI. The SFN transmission mode includes a SFN-CJT transmission mode and/or a SFN-NC-JT transmission mode.

A first type of information field of the DCI is used to indicate that a SDM transmission mode or a FDM transmission mode is supported, and/or a second type of information field of the DCI is used to indicate that a single-RV transmission mode or a multi-RV transmission mode is supported.

The single-RV transmission mode includes a single-RV SDM transmission mode or a single-RV FDM transmission mode, and the multi-RV transmission mode includes a multi-RV SDM transmission mode or a multi-RV FDM transmission mode.

Optionally, in one embodiment of the present disclosure, the indication information does not indicate the SFN transmission mode, which includes cases of: a wireless communication protocol includes a SFN scheme but the indication information does not indicate the SFN transmission mode, or the UE supports the SFN transmission mode but the indication information does not indicate the SFN transmission mode, or the UE does not support the SFN transmission mode and the indication information does not indicate the SFN transmission mode.

Step S92C includes Steps S92C1 and S92C2.

Step S92C1: the first type of information field includes an antenna port indication field of the DCI, and the antenna port indication field is used to indicate the SDM transmission mode or the FDM transmission mode.

Optionally, in one embodiment of the present disclosure, the antenna port indication field carries a first antenna port parameter for indicating the SDM transmission mode, or the antenna port indication field carries a second antenna port parameter for indicating the FDM transmission mode.

Step S92C2 includes one of the following three circumstances.

In a first circumstance, the second type of information field includes a single-TRP-and-MTRP dynamic switching indication field of the DCI, and the single-TRP-and-MTRP dynamic switching indication field is used to indicate the single-RV transmission mode or the multi-RV transmission mode.

Optionally, in one embodiment of the present disclosure, a first codepoint of the single-TRP-and-MTRP dynamic switching indication field carries first indication information for indicating the single-RV transmission mode, or the first codepoint of the single-TRP-and-MTRP dynamic switching indication field carries second indication information for indicating the multi-RV transmission mode. For example, in a case that the first codepoint has a value of "10", it indicates TRP1, TRP2 and the single-RV transmission mode, and in a case that the first codepoint has a value of "11", it indicates TRP1, TRP2 and the multi-RV transmission mode. Here, the first codepoint may include any two consecutive codepoints in the single-TRP-and-MTRP dynamic switching indication field.

In a second circumstance, the second type of information field includes an SRI field or a TPMI field. The SRI field is used to indicate the single-RV transmission mode or the multi-RV transmission mode, or the TPMI field is used to indicate the single-RV transmission mode or the multi-RV transmission mode.

Optionally, in one embodiment of the present disclosure, a second codepoint of the SRI field or the TPMI field carries third indication information for indicating the single-RV transmission mode, or the second codepoint of the SRI field or the TPMI field carries fourth indication information for indicating the multi-RV transmission mode. For example, in a case that the second codepoint has a value of "0", it indicates the single-RV transmission mode, and in case that the second codepoint has a value of "1", it indicates the multi-RV transmission mode. Here, the second codepoint may be a last codepoint in the SRI field or the TPMI field.

In a third circumstance, the second type of information field includes an RV codepoint of the DCI. The RV codepoint is used to indicate the single-RV transmission mode or the multi-RV transmission mode.

Optionally, in one embodiment of the present disclosure, the RV codepoint includes a first value indicating a single RV, which is used for indicating the single-RV transmission mode, or the RV codepoint of the DCI includes a second value indicating a RV set, which is used for indicating the multi-RV transmission mode.

Step S93C: the UE receives the RRC signaling carrying the indication information and the DCI.

Step S94C: in response to the indication information not indicating a SFN transmission mode, the UE determines that the transmission mode for the UE is the SDM transmission mode or the FDM transmission mode based on the first type of information field of the DCI, and/or determines that the transmission mode for the UE is the single-RV transmission mode or the multi-RV transmission mode based on the second type of information field of the DCI.

Of course, in the other embodiments of the present disclosure, each of the first type of information field and the second type of information field may also be any other realizable information field in the DCI, e.g., an unused information field or codepoint.

### Fourth Exemplary Embodiment

The present disclosure provides in this embodiment a transmission mode indication method performed by a communication device. The communication device includes a network device or a UE. The method includes the following steps.

Step S91D: the network device sends a RRC signaling carrying indication information. The indication information is used to indicate at least one transmission mode configured for the UE in an uplink transmission for a coordinated transmission from MPs to MTRPs.

Step S92D: the network device determines that the indication information does not indicate a SFN transmission mode, and sends DCI. The SFN transmission mode includes a SFN-CJT transmission mode and/or a SFN-NC-JT transmission mode.

A first type of information field of the DCI is used to indicate that a SDM transmission mode or a FDM transmission mode is supported, and/or a second type of information field of the DCI is used to indicate that a single-RV transmission mode or a multi-RV transmission mode is supported.

The single-RV transmission mode includes a single-RV SDM transmission mode or a single-RV FDM transmission mode, and the multi-RV transmission mode includes a multi-RV SDM transmission mode or a multi-RV FDM transmission mode.

Optionally, in one embodiment of the present disclosure, the indication information does not indicate the SFN transmission mode, which includes cases of: a wireless communication protocol includes a SFN scheme but the indication information does not indicate the SFN transmission mode, or the UE supports the SFN transmission mode but the indication information does not indicate the SFN transmission mode, or the UE does not support the SFN transmission mode and the indication information does not indicate the SFN transmission mode.

Step S92D includes Steps S92D1 and S92D2. Step S92D1 includes at least one of the following two circumstances.

In a fourth circumstance, the first type of information field includes a single-TRP-and-MTRP dynamic switching indication field of the DCI, and the single-TRP-and-MTRP dynamic switching indication field is used to indicate the SDM transmission mode or the FDM transmission mode.

Optionally, in one embodiment of the present disclosure, a first codepoint of the single-TRP-and-MTRP dynamic switching indication field carries first indication information for indicating the SDM transmission mode, or the first codepoint of the single-TRP-and-MTRP dynamic switching indication field carries second indication information for indicating the FDM transmission mode. For example, in a case that the first codepoint has a value of "10", it indicates TRP1, TRP2 and the SDM transmission mode, and in a case that the first codepoint has a value of "11", it indicates TRP1, TRP2 and the FDM transmission mode. Here, the first codepoint may include any two consecutive codepoints in the single-TRP-and-MTRP dynamic switching indication field.

In a fifth circumstance, the network device determines that the indication information does not indicate the SFN transmission mode, and sends a MAC-CE signaling. The MAC-CE signaling is used to indicate that the SDM transmission mode or the FDM transmission mode is supported.

Step S92D2 includes one of the following two circumstances.

In a sixth circumstance, the second type of information field includes an SRI field or a TPMI field of the DCI. The SRI field is used to indicate the single-RV transmission mode or the multi-RV transmission mode, or the TPMI field is used to indicate the single-RV transmission mode or the multi-RV transmission mode.

Optionally, in one embodiment of the present disclosure, a second codepoint of the SRI field or the TPMI field carries third indication information for indicating the single -RV transmission mode, or the second codepoint of the SRI field or the TPMI field carries fourth indication information for indicating the multi-RV transmission mode. For example, in a case that the second codepoint has a value of "0", it indicates the single-RV transmission mode, and in case that the second codepoint has a value of "1", it indicates the multi-RV transmission mode. Here, the second codepoint may be a last codepoint in the SRI field or the TPMI field.

In a seventh circumstance, the second type of information field includes an RV codepoint of the DCI. The RV codepoint is used to indicate the single-RV transmission mode or the multi-RV transmission mode.

Optionally, in one embodiment of the present disclosure, the RV codepoint includes a first value indicating a single RV, which is used for indicating the single-RV transmission mode, or the RV codepoint includes a second value indicating a RV set, which is used for indicating the multi-RV transmission mode.

Step S93D: the UE receives the RRC signaling carrying the indication information and the DCI.

Optionally, in one embodiment of the present disclosure, the UE receives the RRC signaling carrying the indication information and a MAC-CE signaling.

Step S94D: in response to the indication information not indicating the SFN transmission mode, the UE determines that the transmission mode for the UE is the SDM transmission mode or the FDM transmission mode based on the first type of information field of the DCI, and/or determines that the transmission mode for the UE is the single-RV transmission mode or the multi-RV transmission mode based on the second type of information field of the DCI.

Optionally, in one embodiment of the present disclosure, in response to the indication information not indicating the SFN transmission mode, the UE determines that the transmission mode for the UE is the SDM transmission mode or the FDM transmission mode based on the MAC-CE signaling.

It should be appreciated that, the method in the embodiments of the present disclosure may be performed individually, or performed in combination with some methods in the embodiments of the present disclosure or some methods known in the related art.

As shown in FIG. 9, the present disclosure provides in some embodiments a transmission mode indication apparatus applied to a network device, which includes a sending module 51.

The sending module 51 is configured to send indication information. The indication information is used to indicate at least one transmission mode supported by a UE in an uplink transmission for a coordinated transmission from MPs to MTRPs.

In some embodiments of the present disclosure, the transmission modes include, but not limited to, at least one of a SDM transmission mode or a FDM transmission mode.

The SDM transmission mode includes at least one of a SFN-CJT transmission mode, a SFN-NC-JT transmission mode, a single-RV SDM transmission mode, or a multi-RV SDM transmission mode.

The FDM transmission mode includes at least one of a single-RV FDM transmission mode or a multi-RV FDM transmission mode.

The present disclosure provides in some embodiments a transmission mode indication apparatus applied to a network device, which includes a sending module 51 configured to send a RRC signaling carrying indication information. The indication information is used to indicate that one transmission mode is supported.

The present disclosure provides in some embodiments a transmission mode indication apparatus applied to a network device, which includes a sending module 51 configured to send a RRC signaling carrying indication information. The indication information is used to indicate that at least one transmission mode is configured.

The sending module 51 is further configured to send a MAC-CE signaling. The MAC-CE signaling is used to indicate that one of the at least one transmission mode configured for the UE is supported.

The present disclosure provides in some embodiments a transmission mode indication apparatus applied to a network device, which includes a sending module 51 configured to, in response to indication information not indicating a SFN transmission mode, send DCI. The SFN transmission mode includes a SFN-CJT transmission mode and/or a SFN-NC-JT transmission mode.

The DCI includes at least one of a first type of information field or a second type of information field. The first type of information field is used to indicate that the SDM transmission mode or the FDM transmission mode is supported, and/or the second type of information field is used to indicate that the single-RV transmission mode or the multi-RV transmission mode.

The single-RV transmission mode includes a single-RV SDM transmission mode or a single-RV FDM transmission mode, and the multi-RV transmission mode includes a multi-RV SDM transmission mode or a multi-RV FDM transmission mode.

In some embodiments of the present disclosure, the first type of information field includes an antenna port indication field, and the second type of information field includes at least one of a single-TRP-and-MTRP dynamic switching indication field, an SRI field, a TPMI field, an RV codepoint, or any other information field in the DCI; or the first type of information field includes a single-TRP-and-MTRP dynamic switching indication field, and the second type of information field includes at least one of an SRI field, a TPMI field, an RV codepoint, or any other information field in the DCI.

In some embodiments of the present disclosure, the antenna port indication field carries a first antenna port parameter for indicating the SDM transmission mode, or the antenna port indication field carries a second antenna port parameter for indicating the FDM transmission mode.

In some embodiments of the present disclosure, the first type of information field includes a single-TRP-and-MTRP dynamic switching indication field. A first codepoint of the single-TRP-and-MTRP dynamic switching indication field carries first indication information for indicating the SDM transmission mode, or the first codepoint of the single-TRP-and-MTRP dynamic switching indication field carries second indication information for indicating the FDM transmission mode.

In some embodiments of the present disclosure, the second type of information field includes a single-TRP-and-MTRP dynamic switching indication field. A first codepoint of the single-TRP-and-MTRP dynamic switching indication field carries first indication information for indicating the single-RV transmission mode, or the first codepoint of the single-TRP-and-MTRP dynamic switching indication field carries second indication for indicating the multi -RV transmission mode.

In some embodiments of the present disclosure, a second codepoint of the SRI field or the TPMI field carries third indication information for indicating the single-RV transmission mode, or the second codepoint of the SRI field or the TPMI field carries fourth indication information or indicating the multi-RV transmission mode.

In some embodiments of the present disclosure, the RV codepoint of the DCI includes a first value indicating a single RV, which is used for indicating the single-RV transmission mode, or the RV codepoint of the DCI includes a second value indicating a RV set, which is used for indicating the multi-RV transmission mode.

The present disclosure provides in some embodiments a transmission mode indication apparatus applied to a network device, which includes a sending module 51 configured to, in response to indication information not indicating a SFN transmission mode, send a MAC-CE signaling. The SFN transmission mode includes a SFN-CJT transmission mode and/or a SFN-NC-JT transmission mode. The MAC-CE signaling is used to indicate that a SDM transmission mode or a FDM transmission mode is supported.

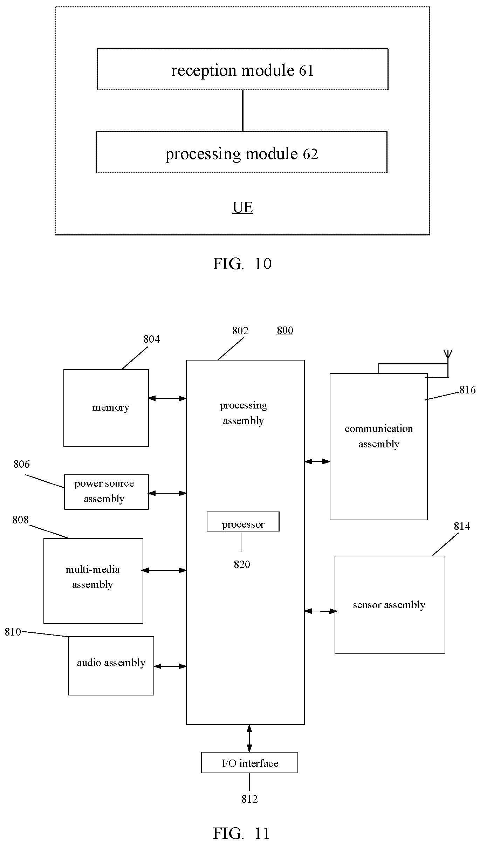

As shown in FIG. 10, the present disclosure provides in some embodiments a transmission mode indication apparatus applied to a UE, which includes a reception module 61 and a processing module 62.

The reception module 61 is configured to receive indication information.

The processing module 62 is configured to determine at least one transmission mode supported by the UE in an uplink transmission for a coordinated transmission from MPs to MTRPs based on the indication information.

In some embodiments of the present disclosure, the transmission mode includes, but not limited to, at least one of a SDM transmission mode or a FDM transmission mode.

The SDM transmission mode includes, but not limited to, at least one of a SFN-CJT transmission mode, a SFN-NC-JT transmission mode, a single-RV SDM transmission mode, or a multi-RV SDM transmission mode.

The FDM transmission mode includes, but not limited to, at least one of a single-RV FDM transmission mode or a multi-RV FDM transmission mode.

The present disclosure provides in some embodiments a transmission mode indication apparatus applied to a UE, which includes a reception module 61 and a processing module 62.

The reception module 61 is configured to receive a RRC signaling carrying indication information.

The processing module 62 is configured to determine one transmission mode supported by the UE in an uplink transmission based on the one transmission mode indicated in the indication information.

The present disclosure provides in some embodiments a transmission mode indication apparatus applied to a UE, which includes a reception module 61 and a processing module 62.

The reception module 61 is configured to receive a RRC signaling carrying indication information and a MAC-CE signaling.

The processing module 62 is configured to determine one transmission mode supported by the UE in an uplink transmission from at least one transmission mode configured as indicated in the indication information based on the MAC-CE signaling.

The present disclosure provides in some embodiments a transmission mode indication apparatus applied to a UE, which includes a reception module 61 and a processing module 62.

The reception module 61 is configured to receive DCI. The DCI is sent by a network device in a case that the indication information does not indicate a SFN transmission mode, the DCI includes at least one of a first type of information field and a second type of information field, and the SFN transmission mode includes a SFN-CJT transmission mode and/or a SFN-NC-JT transmission mode.

The processing module 62 is configured to determine that the transmission mode for the UE is a SDM transmission mode or a FDM transmission mode based on the first type of information field of the DCI, and/or determine that the transmission mode for the UE is a single-RV transmission mode or a multi-RV transmission mode based on the second type of information field of the DCI.

The single-RV transmission mode includes a single-RV SDM transmission mode or a single-RV FDM transmission mode, and the multi-RV transmission mode includes a multi-RV SDM transmission mode or a multi-RV FDM transmission mode.

In some embodiments of the present disclosure, the first type of information field includes an antenna port indication field, and the second type of information field includes at least one of a single-TRP-and-MTRP dynamic switching indication field, an SRI field, a TPMI field, an RV codepoint, or any other information field in the DCI.

In some embodiments of the present disclosure, the first type of information field includes a single-TRP-and-MTRP dynamic switching indication field, and the second type of information field includes at least one of an SRI field, a TPMI field, an RV codepoint, or any other information field in the DCI.

The present disclosure provides in some embodiments a transmission mode indication apparatus applied to a UE, which includes a processing module 62.

The processing module 62 is configured to, in response to an antenna port indication field carrying a first antenna port parameter, determine that a transmission mode for the UE is a SDM transmission mode, or the processing module 62 is configured to, in response to the antenna port indication field carrying a second antenna port parameter, determine that the transmission mode for the UE is a FDM transmission mode.

The present disclosure provides in some embodiments a transmission mode indication apparatus applied to a UE, which includes a processing module 62.

The processing module 62 is configured to, in response to a first codepoint of a single-TRP-and-MTRP dynamic switching indication field carrying first indication information, determine that a transmission mode for the UE is a SDM transmission mode, or the processing module 62 is configured to, in response to the first codepoint of the single-TRP-and-MTRP dynamic switching indication field carrying second indication information, determine that the transmission mode for the UE is a FDM transmission mode.

The present disclosure provides in some embodiments a transmission mode indication apparatus applied to a UE, which includes a processing module 62.

The processing module 62 is configured to, in response to a first codepoint of a single-TRP-and-MTRP dynamic switching indication field carrying second indication information, determine that a transmission mode for the UE is a single-RV transmission mode, or the processing module 62 is configured to, in response to the first codepoint of the single-TRP-and-MTRP dynamic switching indication field carrying second indication information, determine that the transmission mode for the UE is a multi-RV transmission mode.

The present disclosure provides in some embodiments a transmission mode indication apparatus applied to a UE, which includes a processing module 62.

The processing module 62 is configured to, in response to a second codepoint of an SRI field or a TPMI field carrying third indication information, determine that a transmission mode for the UE is a single-RV transmission mode, or the processing module 62 is configured to, in response to the second codepoint of the SRI field or the TPMI field carrying fourth indication information, determine that the transmission mode for the UE is a multi-RV transmission mode.

The present disclosure provides in some embodiments a transmission mode indication apparatus applied to a UE, which includes a processing module 62.

The processing module 62 is configured to, in response to an RV codepoint of the DCI including a first value indicating a single RV, determine that a transmission mode for the UE is a single-RV transmission mode; or in response to an RV codepoint of the DCI including a second value indicating a RV set, determine that the transmission mode for the UE is a multi -RV transmission mode.

The present disclosure provides in some embodiments a transmission mode indication apparatus applied to a UE, which includes a reception module 61 and a processing module 62.

The reception module 61 is configured to receive a MAC-CE signaling. The MAC-CE signaling is sent by a network device in a case that indication information does not indicate a SFN transmission mode. The SFN transmission mode including a SFN-CJT transmission mode and/or a SFN-NC-JT transmission mode.

The processing module 62 is configured to determine that a transmission mode for the UE is a SDM transmission mode or a FDM transmission mode based on the MAC-CE signaling.

It should be appreciated that, the apparatus may be implemented individually, or implemented in combination with some apparatus in the embodiments of the present disclosure or some apparatus known in the related art.

With respect to the apparatus in the embodiments of the present disclosure, a specific mode of performing the operations by each module has already been described in details in the above-mentioned method embodiments, which will not be particularly defined herein.

The present disclosure provides in some embodiments a communication device, which includes a processor and a memory storing therein an executable instruction by the processor. The processor is configured to execute the executable instruction to implement the above-mentioned transmission mode indication method.

In one embodiment of the present disclosure, the communication device includes, but not limited to, at least one of a network device or a UE. The network device includes a core network device or an access network device. The access network device includes a base station.

The processor includes various types of storage mediums, and the storage medium is a non-temporary computer storage medium so that the processor is capable of continuously memorizing information stored therein in a case that the communication device is powered off.

The processor is coupled to the memory via a bus, and configured to read an executable program stored in the memory, so as to implement at least one of the methods in FIGs. 3 to 8.

The present disclosure further provides in some embodiments a computer storage medium storing therein a computer-executable program. The computer-executable program is executed by a processor to implement the above-mentioned transmission mode indication method, e.g., implement at least one of the methods in FIGs. 3 to 8.

With respect to the apparatus or storage medium in the embodiments of the present disclosure, a specific mode of performing the operations by each module has already been described in details in the above-mentioned method embodiments, which will not be particularly defined herein.

FIG. 11 is a block diagram of a UE 800 according to the embodiments of the present disclosure. For example, the UE 800 is a mobile phone, a computer, a digital broadcasting terminal device, a message transceiver device, a game console, a flat-panel device, medical equipment, fitness equipment, or a personal digital assistant.

As shown in FIG. 11, the UE 800 includes at least one assembly selected from the group consisting of a processing assembly 802, a memory 804, a power source assembly 806, a multi-media assembly 808, an audio assembly 810, an Input/Output (I/O) interface 812, a sensor assembly 814, and a communication assembly 816.

Generally, the processing assembly 802 controls an entire operation of the UE 800, e.g., operations associated with display, phone call, data communication, camera operation and recording operation. The processing assembly 802 includes at least one processor 820 to execute an instruction, so as to implement all of, or a part of, the steps of the above-mentioned method. In addition, the processing assembly 802 includes at least one module for the interaction between the processing assembly 802 and the other assembly. For example, the processing assembly 802 includes a multi-media module for the interaction between the multi-media assembly 808 and the processing assembly 802.

The memory 804 is configured to store therein various types of data to support the operation of the UE 800. Examples of such data include instructions for any application or method operated on the UE 800, contact data, phonebook data, messages, pictures, video, etc. The memory 804 may be implemented in the form of any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic disk, or an optical disk.

The power source assembly 806 provides power to various assemblies of the UE 800. The power source assembly 806 may include a power management system, one or more power sources, and any other assemblies associated with the generation, management and distribution of power in the UE 800.

The multi-media assembly 808 includes a screen for providing an output interface between the UE 800 and a user. In some embodiments of the present dis closure, the screen may include a Liquid Crystal Display (LCD) and a Touch Panel (TP). When the screen includes the touch panel, the screen may be implemented as a touch screen to receive input signals from the user. The touch panel includes at least one touch sensor to sense touches, swipes, and gestures on the touch panel. The touch sensor may not only sense a boundary of a touch or swipe action, but also sense a period of time and a pressure associated with the touch or swipe action. In some embodiments of the present disclosure, the multi-media assembly 808 includes a front-facing camera and/or a rear-facing camera. When the UE 800 is in an operating mode, such as a shooting mode or a video mode, the front-facing camera and/or the rear-facing camera may receive external multi-media data. Each of the front-facing camera and the rear-facing camera may be a fixed optical lens system or has focal length and optical zoom capability.

The audio assembly 810 is configured to output and/or input audio signals. For example, the audio assembly 810 includes a microphone (MIC) configured to receive an external audio signal when the UE 800 is in an operating mode, such as a call mode, a recording mode, and a voice recognition mode. The received audio signal may be further stored in the memory 804 or transmitted via the communication assembly 816. In some embodiments of the present disclosure, the audio assembly 810 further includes a speaker to output audio signals.

The I/O interface 812 provides an interface between the processing assembly 802 and peripheral interface modules, such as a keyboard, a click wheel, buttons, and the like. The buttons may include, but not limited to, a home button, a volume button, a starting button, and a locking button.

The sensor assembly 814 includes one or more sensors to provide status assessments about various aspects of the UE 800. For example, the sensor assembly 814 may detect an open/closed status of the UE 800, relative positioning of assemblies, e.g., the display and the keypad, of the UE 800, a change in a position of the UE 800 or an assembly of the UE 800, a presence or absence of user contact with the UE 800, an orientation or an acceleration/deceleration of the UE 800, and a change in a temperature of the UE 800. The sensor assembly 814 may include a proximity sensor configured to detect the presence of nearby objects without any physical contact. The sensor assembly 814 may also include a light sensor, such as a Complementary Metal Oxide Semiconductor (CMOS) or Charge-Coupled Device (CCD) image sensor, for use in imaging applications. In some embodiments of the present disclosure, the sensor assembly 814 may also include an accelerometer sensor, a gyroscope sensor, a magnetic sensor, a pressure sensor, or a temperature sensor.

The communication assembly 816 is configured to facilitate wired or wireless communication between the UE 800 and other devices. The UE 800 may access a wireless network based on a communication standard, such as Wi-Fi, 2G or 3G, or a combination thereof. In an exemplary embodiment of the present disclosure, the communication assembly 816 receives a broadcast signal or broadcast associated information from an external broadcast management system via a broadcast channel. In an exemplary embodiment of the present disclosure, the communication assembly 816 further includes a Near Field Communication (NFC) module to facilitate short-range communication. For example, the NFC module may be implemented based on an RF Identification (RFID) technology, an Infrared Data Association (IrDA) technology, an Ultra-Wide Band (UWB) technology, a Blue Tooth (BT) technology, and other technologies.

In the exemplary embodiment of the present disclosure, the UE 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above-mentioned method.

The present disclosure further provides in some embodiments a non-temporary computer-readable storage medium including an instruction, e.g., the memory 804 including the instruction. The instruction is executed by the processor 820 of the UE 800 to generate the above-mentioned method. For example, the non-temporary computer-readable storage medium may be an ROM, Random Access Memory (RAM), a CD-ROM, a magnetic tape, a floppy disk, an optical data storage device, etc.

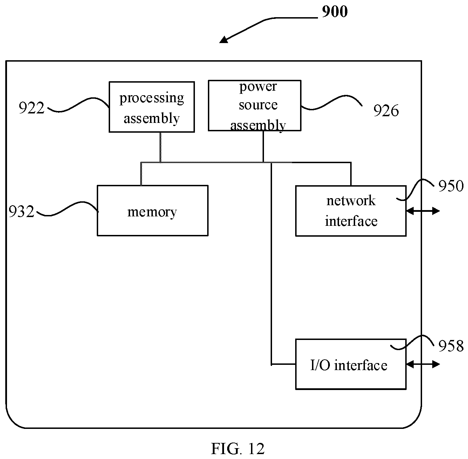

FIG. 12 shows a structure of a base station. For example, the base station 900 may be provided as a network side device. As shown in FIG. 12, the base station 900 includes a processing assembly 922, which further includes one or more processors and memory resources represented by a memory 932 for storing therein instructions to be executed by the processing assembly 922, e.g., applications. The applications stored in the memory 932 may include one or more modules each corresponding to one group of instructions. In addition, the processing assembly 922 is configured to execute the instructions, so as to implement any method for the base station.

The base station 900 further includes a power source assembly 926 configured to performed power management over the base station 900, a wired or wireless network interface 950 configured to couple the base station 900 to a network, and an Input/Output (I/O) interface 958. The base station 900 may be based on an operating system stored in the memory 932, e.g., Windows Server TM, Mac OS XTM, Unix TM, Linux TM, Free BSDTM, or the like.

Other embodiments of the present disclosure will be apparent to those skilled in the art from consideration of the specification and practice of the present disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the appended claims.

It should be appreciated that, the present disclosure is not limited to the exact construction that has been described hereinabove and illustrated in the accompanying drawings, and that various modifications and changes can be made without departing from the scope thereof. It is intended that the scope of the present disclosure only be limited by the app ended claims.

## Claims

1. A transmission mode indication method, performed by a network device, comprising:
sending indication information, wherein the indication information is used to indicate at least one transmission mode supported by a user equipment (UE) in an uplink transmission for a coordinated transmission from multiple panels (MPs) to multiple transmission reception points (MTRPs).

2. The transmission mode indication method of claim 1, wherein the at least one transmission mode comprises at least one of:
a space division multiplexing (SDM) transmission mode, wherein the SDM transmission mode comprises at least one of a single frequency network coherent joint transmission (SFN-CJT) transmission mode, a single frequency network non-coherent joint transmission (SFN-NC-JT) transmission mode, a single-redundancy version (RV) SDM transmission mode, or a multi-RV SDM transmission mode; or
a frequency division multiplexing (FDM) transmission mode, wherein the FDM transmission mode comprises at least one of a single-RV FDM transmission mode or a multi-RV FDM transmission mode.

3. The transmission mode indication method of claim 1 or 2, wherein the sending the indication information comprises:
sending a radio resource control (RRC) signaling carrying the indication information, wherein the indication information is used to indicate that one of the at least one transmission mode is supported.

4. The transmission mode indication method of claim 1 or 2, wherein the sending the indication information comprises:
sending a RRC signaling carrying the indication information, wherein the indication information is used to indicate that the at least one transmission mode is configured,
wherein the transmission mode indication method comprises:
sending a media access control-control element (MAC-CE) signaling, wherein the MAC-CE signaling is used to indicate that one of the at least one transmission mode configured by the UE is supported.

5. The transmission mode indication method of claim 1 or 2, further comprising:
in response to the indication information not indicating a SFN transmis sion mode, sending downlink control information (DCI), wherein the SFN transmission mode comprises the SFN-CJT transmission mode and/or the SFN-NC-JT transmission mode,
wherein the DCI comprises at least one of a first type of information field or a second type of information field;
the first type of information field is used to indicate that the SDM transmission or the FDM transmission mode is supported;
the second type of information field is used to indicate that the single-RV FDM transmission mode or the multi-RV FDM transmission mode is supported;
the single-RV transmission mode comprises the single-RV SDM transmission mode or the single-RV FDM transmission mode; and
the multi-RV transmission mode comprises the multi-RV SDM transmission mode or the multi-RV FDM transmission mode.

6. The transmission mode indication method of claim 5, wherein the first type of information field comprises an antenna port indication field, and the second type of information field comprises at least one of a single-transmission reception point (TRP)-and-MTRP dynamic switching indication field, a sounding reference signal resource indicator (SRI) field, a transmitted precoding matrix indicator (TPMI) field, an RV codepoint or any other information field in the DCI; or
the first type of information field comprises a single-TRP-and-MTRP dynamic switching indication field, and the second type of information field comprises at least one of an SRI field, a TMPI field, an RV codepoint or any other information field in the DCI.

7. The transmission mode indication method of claim 6, wherein the antenna port indication field carries a first antenna port parameter for indicating the SDM transmission mode; or
the antenna port indication field carries a second antenna port parameter for indicating the FDM transmission mode.

8. The transmission mode indication method of claim 6, wherein the first type of information field comprises the single-TRP-and-MTRP dynamic switching indication field,
wherein a first codepoint of the single-TRP-and-MTRP dynamic switching indication field carries first indication information for indicating the SDM transmission mode; or
a first codepoint of the single-TRP-and-MTRP dynamic switching indication field carries second indication information for indicating the FDM transmission mode.

9. The transmission mode indication method of claim 6, wherein the second type of information field comprises the single-TRP-and-MTRP dynamic switching indication field,
wherein a first codepoint of the single-TRP-and-MTRP dynamic switching indication field carries first indication information for indicating the single-RV transmission mode; or
a first codepoint of the single-TRP-and-MTRP dynamic switching indication field carries second indication information for indicating the multi-RV transmission mode.

10. The transmission mode indication method of claim 6, wherein a second codepoint of the SRI field or the TPMI field carries third indication information for indicating the single-RV transmission mode; or
a second codepoint of the SRI field or the TPMI field carries fourth indication information for indicating the multi-RV transmission mode.

11. The transmission mode indication method of claim 6, wherein an RV codepoint of the DCI comprises a first value indicating a single RV, used for indicating the single-RV transmission mode; or
an RV codepoint of the DCI comprises a second value indicating a RV set, used for indicating the multi-RV transmission mode.

12. The transmission mode indication method of claim 1 or 2, further comprising:
in response to the indication information not indicating a SFN transmission mode, sending a MAC-CE signaling, wherein the SFN transmission mode comprises the SFN-CJT transmission mode and/or the SFN-NC-JT transmission mode, and the MAC-CE signaling is used to indicate that the SDM transmission mode or the FDM transmission mode is supported.

13. A transmission mode indication method, performed by a UE, comprising:
receiving indication information; and
determining at least one transmission mode supported by the UE in an uplink transmission for a coordinated transmission from MPs to MTRPs based on the indication information.

14. The transmission mode indication method of claim 13, wherein the at least one transmission mode comprises at least one of:
a SDM transmission mode, wherein the SDM transmission mode comprises at least one of a SFN-CJT transmission mode, a SFN-NC-JT transmission mode, a RV SDM transmission mode, or a multi-RV SDM transmission mode; or
a FDM transmission mode, wherein the FDM transmission mode comprises at least one of a single-RV FDM transmission mode or a multi-RV FDM transmission mode.

15. The transmission mode indication method of claim 13 or 14, wherein the receiving the indication information comprises receiving a RRC signaling carrying the indication information,
wherein the determining the at least one transmission mode supported by the UE in the uplink transmission for the coordinated transmission from the MPs to the MTRPs comprises:
determining one of the at least one transmission mode supported by the UE in the uplink transmission based on the one of the at least one transmission mode indicated in the indication information.

16. The transmission mode indication method of claim 13 or 14, wherein the receiving the indication information comprises receiving a RRC signaling carrying the indication information,
wherein the transmission mode indication method comprises receiving a MAC-CE signaling,
wherein the determining the at least one transmission mode supported by the UE in the uplink transmission for the coordinated transmission from the MPs to the MTRPs comprises:
determining one of the at least one transmission mode supported by the UE in the uplink transmission from the at least one transmission mode configured as indicated in the indication information based on the MAC-CE signaling.

17. The transmission mode indication method of claim 13 or 14, further comprising:
receiving DCI, wherein the DCI is sent by a network device in a case that the indication information does not indicate a SFN transmission mode, the DCI comprises at least one of a first type of information field or a second type of information field, and the SFN transmission mode comprises the SFN-CJT transmission mode and/or the SFN-NC-JT transmission mode;
determining that the transmission mode for the UE is the SDM transmission mode or the FDM transmission mode based on the first type of information field in the DCI; and/or
determining that the transmission mode for the UE is the single-RV transmission mode or the multi-RV transmission mode based on the second type of information field in the DCI,
wherein the single-RV transmission mode comprises a single-RV SDM transmission mode or a single-RV FDM transmission mode, and the multi-RV transmission mode comprises a multi-RV SDM transmission mode or a multi-RV FDM transmission mode.

18. The transmission mode indication method of claim 17, wherein the first type of information field comprises an antenna port indication field, and the second type of information field comprises at least one of a single-TRP-and-MTRP dynamic switching indication field, a SRI field, a TPMI field, an RV codepoint or any other information field in the DCI; or
the first type of information field comprises a single-TRP-and-MTRP dynamic switching indication field, and the second type of information field comprises at least one of an SRI field, a TMPI field, an RV codepoint or any other information field in the DCI.

19. The transmission mode indication method of claim 18, wherein the determining that the transmission mode for the UE is the SDM transmission mode or the FDM transmission mode based on the first type of information field in the DCI comprises one of:
in response to the antenna port indication field carrying a first antenna port parameter, determining that the transmission mode for the UE is the SDM transmission mode; or
in response to the antenna port indication field carrying a second antenna port parameter, determining that the transmission mode for the UE is the FDM transmission mode.

20. The transmission mode indication method of claim 18, wherein the determining that the transmission mode for the UE is the SDM transmission mode or the FDM transmission mode based on the first type of information field in the DCI comprises one of:
in response to a first codepoint of the single-TRP-and-MTRP dynamic switching indication field carrying first indication information, determining that the transmission mode for the UE is the SDM transmission mode; or
in response to a first codepoint of the single-TRP-and-MTRP dynamic switching indication field carrying second indication information, determining that the transmission mode for the UE is the FDM transmission mode.

21. The transmission mode indication method of claim 18, wherein the determining that the transmission mode for the UE is the single-RV transmission mode or the multi-RV transmission mode based on the second type of information field in the DCI comprises one of:
in response to a first codepoint of the single-TRP-and-MTRP dynamic switching indication field carrying first indication information, determining that the transmission mode for the UE is the single-RV transmission mode; or
in response to a first codepoint of the single-TRP-and-MTRP dynamic switching indication field carrying second indication information, determining that the transmission mode for the UE is the multi-RV transmission mode.

22. The transmission mode indication method of claim 18, wherein the determining that the transmission mode for the UE is the single-RV transmission mode or the multi-RV transmission mode based on the second type of information field in the DCI comprises one of:
in response to a second codepoint of the SRI field or the TPMI field carrying third indication information, determining that the transmission mode for the UE is the single-RV transmission mode; or
in response to a second codepoint of the SRI field or the TPMI field carrying fourth indication information, determining that the transmission mode for the UE is the multi-RV transmission mode.

23. The transmission mode indication method of claim 18, wherein the determining that the transmission mode for the UE is the single-RV transmission mode or the multi-RV transmission mode based on the second type of information field in the DCI comprises one of:
in response to an RV codepoint of the DCI comprising a first value indicating a single RV, determining that the transmission mode for the UE is the single-RV transmission mode; or
in response to an RV codepoint of the DCI comprising a second value indicating a RV set, determining that the transmission mode for the UE is the multi-RV transmission mode.

24. The transmission mode indication method of claim 13 or 14, further comprising:
receiving a MAC-CE signaling, wherein the MAC-CE signaling is sent by a network device in a case that the indication information does not indicate a SFN transmission mode, and the SFN transmission mode comprises the SFN-CJT transmission mode and/or the SFN-NC-JT transmission mode; and
determining that the transmission mode for the UE is the SDM transmission mode or the FDM transmission mode based on the MAC-CE signaling.

25. A transmission mode indication apparatus, applied to a network device, comprising:
a sending module configured to send indication information, wherein the indication information is used to indicate at least one transmission mode supported by a UE in an uplink transmission for a coordinated transmission from MPs to MTRPs.

26. A transmission mode indication apparatus, applied to a UE, comprising:
a reception module configured to receive indication information; and
a processing module configured to determine at least one transmission mode supported by the UE in an uplink transmission for a coordinated transmission from MPs to MTRPs.

27. A communication device, comprising:
a processor; and
a memory storing therein an instruction executable by the processor,
wherein the processor is configured to execute the instruction to implement the transmission mode indication method of any one of claims 1 to 12, or any one of claims 13 to 24.

28. A computer storage medium storing therein a computer-executable program, wherein the computer-executable program is executed by a processor to implement the transmission mode indication method of any one of claims 1 to 12, or any one of claims 13 to 24.
